(19) Europäisches Patentamt
European Patent Office
Office européen des brevets

(11) **EP 2 360 124 B1**

(12) **EUROPEAN PATENT SPECIFICATION**

(45) Date of publication and mention
of the grant of the patent:
**11.12.2013 Bulletin 2013/50**

(51) Int Cl.:
**C03B 7/16** (2006.01)

(21) Application number: **11153753.6**

(22) Date of filing: **08.02.2011**

(54) **Gob scoop for a glassware manufacturing machine**

Glastropfenbehälter für eine Glaswarenherstellungsmaschine

Godet de transfert pour machine à fabriquer des objets en verre

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.02.2010 US 705295**

(43) Date of publication of application:
**24.08.2011 Bulletin 2011/34**

(73) Proprietor: **Emhart Glass S.A.**
**6330 Cham (CH)**

(72) Inventors:
• **McDermott, Braden A.**
**West Hartford, CT 06110 (US)**
• **Simon, Jonathan S.**
**Pleasant Valley, CT 06063 (US)**
• **Ding, Xu**
**West Hartford, CT 06107 (US)**

(74) Representative: **Johnstone, Douglas Ian et al**
**Baron Warren Redfern**
**Cambridge House**
**100 Cambridge Grove**
**Hammersmith**
**London**
**W6 0LE (GB)**

(56) References cited:
**JP-A- 63 236 718    US-A- 1 473 587**
**US-A- 1 959 328    US-A- 2 079 519**
**US-A- 2 637 429    US-A- 5 824 129**
**US-A- 6 038 888    US-A1- 2002 046 575**
**US-A1- 2006 075 785**

**Description**

The present invention relates generally to apparatus for delivering molten gobs of glass supplied by a shearing mechanism from a stream of molten glass to the parison molds of an Individual Section (IS) machine for making glass containers, and more particularly to a scoop for receiving the glass gobs formed by the shearing mechanism and providing an optimal trajectory while ensuring that glass gobs passing therethrough will have an optimal and uniform gob shape.

Glass containers are made in a manufacturing process that has three distinct operations, namely the batch house, the hot end, and the cold end. The batch house is where the raw materials for glass (which are typically sand, soda ash, limestone, feldspar, cullet (crushed, recycled glass), and other raw materials) are prepared and mixed into batches. The hot end melts the batched materials into molten glass, distributes discrete segments of molten glass referred to in the industry as glass "gobs" to molding apparatus where they are molded into glass containers, and anneals the glass containers to prevent them from being weakened due to stresses caused by uneven cooling. The cold end inspects the glass containers to ensure that they are of acceptable quality.

Typically, the molding portion of the hot end of the manufacturing process is performed in an Individual Section or IS forming machine, which contains between five and twenty identical sections, each of which is capable of making one, two, three, or four containers simultaneously. The hot end begins with a furnace, in which the batched materials are melted into molten glass, and from which streams of molten glass flow through a feeder bowl to multiple outlets. Since each section of an IS machine has one, two, three, or four sets of molding apparatus which will operate simultaneously, one, two, three, or four outlets from the furnace will simultaneously supply streams of molten glass to these respective sets of molding apparatus. Each of the streams of molten glass is cut with a shearing mechanism into uniform segments of glass called gobs, which fall by gravity and are guided through scoops, troughs, and deflectors into their respective blank (or parison) molds in the section of the IS machine.

In each set of blank molds, a pre-container referred to as a parison is formed, either by using a metal plunger to push the glass gob into the blank mold, or by blowing the glass gob out from below into the blank mold. The parison is then inverted and it is transferred to a second or blow mold, where the parison is blown out into the shape of the finished glass container. The blown parison is then cooled in the blow mold to the point where it is sufficiently rigid to be gripped and removed from the blow station.

The general focus of the present invention is on the apparatus that distributes a glass gob to the molding apparatus in a section, which apparatus typically includes a scoop, a trough, and a deflector. Such an apparatus is taught, for example, in U.S. Patent No. 5,549,727, to Meyer, which patent is assigned to the present applicant. The scoop receives a vertically falling glass gob at a location under the shearing mechanism and is curved to redirect the trajectory of the glass gob from a vertical drop at a first or inlet end of the scoop to an angular trajectory at a second or outlet end of the scoop.

From the second or outlet end of the scoop, the glass gob enters a first or upper end of an upwardly facing downwardly sloping generally straight trough that is generally aligned with the second or outlet end of the scoop and exits a second or lower end of the trough. In some cases, the upper end of the scoop is wider than glass gobs entering the scoop to ensure that the glass gobs will be captured within the scoop. From the second or lower end of the trough, the glass gob enters the upper end of a downwardly facing curved deflector and is redirected to a vertical drop at a second or lower end of the deflector, from which the glass gob is directed into the blank mold. The upper end of the deflector is generally aligned with the second or outlet end of the trough. The trough has a generally U-shaped cross-sectional configuration that is open on its upwardly facing side, while the deflector has a generally inverted U-shaped cross-sectional configuration that is open in its downwardly facing side.

The specific focus of the present invention is on the first element of this glass gob distributing apparatus, the scoop. It will be appreciated by those skilled in the art that delivering a good glass gob to the blank mold is of great importance and that the design of the scoop has a direct impact on the shape of the glass gob as it transits the scoop. A good glass gob should have a uniform shape and should be the correct length for the blank mold. Further, in order to get the glass gob to load deep into the blank mold, a high gob velocity is required as well as a properly shaped glass gob. It is not possible to make a good glass container from a poor quality or slow glass gob.

A glass gob is formed from molten glass dropping from an orifice in a gob feeder in a glass stream. This glass stream falls downwardly due to the forces of gravity, and is cut into uniform glass gobs by a shear mechanism. Since the molten glass flowing downwardly from the orifice in the gob feeder is very fluid, as the glass stream drops through gravity, it begins to break away in the middle, below the point at which the glass gob is cut by the shear mechanism. The shape of the glass gob is also influenced by an oscillating motion of a "needle" located in the gob feeder that tends to push molten glass out of the orifice in the gob feeder as it moves downward and tends to draw the glass back up into the orifice as it moves upward. This produces a glass gob having enlarged upper and lower portions with a narrowed intermediate portion, a shape which is referred to in the industry as a "dog-bone" shape.

During the time that the glass gob is deposited into the scoop and transits the scoop, the trough, and the deflector and drops into the blank mold, it has been determined that the glass gobs do not recover from variations in the shape of the glass gobs as they are supplied to this delivery system. While popular belief in the past has been that they can recover their shape in this delivery system to some degree, the inventors have determined that this is not the case. However, the inventors have determined that any shaping of glass gobs that is done in this delivery system will affect the shape of the glass gobs delivered to the blank mold.

However, in the past no shaping of glass gobs in this delivery system has been successfully attempted due to the fact that any such shaping has resulted in a significant adverse effect on the speed of the glass gobs, namely slowing of the speed of the glass gobs in the glass gob delivery system. In order to ensure that the glass gobs load deeply within the blank mold, it is necessary to ensure that the glass gobs have a high gob velocity. Any loss in the speed of the glass gobs as they are delivered to blank molds will have an adverse effect on parison quality, and thus on finished glass container quality when such imperfect parisons are blown, which represents a serious adverse consequence.

Thus, it is apparent that it would be desirable to improve glass gob shape as the glass gobs transit the scoop. However, such improvements in glass gob shape would have to be accomplished in the scoop without a significant decrease in the speed of the glass gobs in the glass gob delivery system. Such improvements in glass gob shape in the scoop should thus enhance glass gob shape to produce a more uniformly cylindrical glass gobs, thereby eliminating the dog-bone shape(as well as any other non-uniform gob shapes), so long as that is accomplished while maintaining a sufficient glass gob exit velocity from the scoop. Further, it is also desirable that the improvement in glass gob shape be accomplished in the scoop without significantly lengthening the glass gobs.

Various forms of scoops for glassware manufacturing machines are disclosed in US-2002/046,575A1, 5,824,129A, 2,637,429A, 1,473,587A and 6,038,888, and JP 63,236718A, but none of these is concerned with improving glass gob shape.

The present invention is directed to a scoop for conveying gobs of molten glass generally of the type disclosed in US-2002/046,575A1 and as defined in the preamble of claim 1. However, this US-A1 is concerned with configuring the scoop to accommodate a wide range of gob sizes, and to maintaining the gobs out of contact with the bottom of the scoop to avoid contact with any liquid coolant that may be flowing through the scoop along the bottom thereof.

According to the present invention, there is provided a scoop as defined in the characterizing clause of claim 1.

The invention also provides an Individual Section machine as defined in claim 16 and a method for conveying gobs of molten glass as defined in claim 17.

The optimized scoop embodying the present invention should be capable of a construction which is both durable and long lasting, and it should also require little or no maintenance to be provided by the user throughout its operating lifetime. In order to enhance the market appeal of the optimized scoop embodying the present invention, it should also be of inexpensive construction to thereby afford it the broadest possible market. Finally, it is also an objective that the aforesaid advantages are capable of being achieved without incurring any substantial relative disadvantage.

The disadvantages and limitations of the background art discussed above are alleviated or overcome by the scoop embodying the present invention. Two fundamental changes are made to the configuration of a scoop to optimize the scoop to transit glass gobs therethrough while giving the glass gobs an optimized shape without substantially sacrificing glass gob velocity. The first change is to provide a gradual taper to the optimized scoop to facilitate shaping of the glass gob into a more cylindrical configuration as it transits the optimized scoop. The second change is to provide an optimum glass gob trajectory within the optimized scoop to increase the velocity of the glass gob as it transits the optimized scoop.

Thus, the focus of the new optimized scoop is to provide glass gobs having an optimal shape without sacrificing glass gob velocity. An optimal trajectory for the optimized scoop is selected to increase the glass gob speed over that of existing scoops, while elongating the glass gob only slightly. The cross-sectional configuration of the optimized scoop is gradually tapered and has a lower end that is slightly smaller than the largest diameter portion of glass gobs delivered to the optimized scoop. While existing scoops have utilized a flared opening at the upper end to provide a funneling effect to help ensure that glass gobs are captured by the scoop, they have not been tapered in the manner utilized by the optimized scoop embodying the present invention, which is tapered to cause the glass gob to be slightly extruded, thus obtaining a desirable shape. This helps the optimized scoop to shape glass gobs into a more cylindrical shape, and the optimized scoop will then guide the glass gobs into the correct landing zone in the trough. (Variations in the landing of glass gobs in the trough eventually result in glass container defects due to oddly shaped glass gobs.)

It has been determined by the inventors that by forcing glass gobs through a reduced cross-section achieved by a tapering of the cross-sectional configuration of the optimized scoop from the upper end to the lower end, they may be extruded to a highly repeatable length, so long as the weight and viscosity of the glass gobs remain constant. The other benefit of such a configuration is that the glass gobs can not "wander" down the optimized scoop (from high speed video it has been determined that, in some cases, glass gobs actually slalom down the scoop).

This cross-section design of the optimized scoop can greatly reduce the variations in glass gobs due to non-uniform glass gobs being provided from the gob feeder to the scoop or due to transit (wandering) of the glass gobs as they pass through previously known scoop designs. With the improved cross-sectional configuration of the optimized scoop, it is possible to simultaneously improve glass gob shape and reduce variations in the glass gobs delivered to the trough, while reducing glass gob speed only marginally. Another effect of the optimized scoop is the elimination of dog-bone configurations of the glass gobs.

While it will be appreciated that the reduced cross-sectional configuration of the optimized scoop will marginally reduce the velocity of glass gobs transiting the optimized scoop, the optimized scoop is able to minimize this velocity reduction and may actually marginally increase the velocity of glass gobs (relative to previously known scoop designs) transiting the optimized scoop by utilizing a unique scoop trajectory design. Unlike previously known scoops that use a curvature having a selected radius, the optimized scoop embodying the present invention uses Bezier curves to define the trajectory of the optimized scoop. (Bezier curves are well known, and are curved lines that are defined by mathematical equations.)

Bezier parameterization produces generally well behaved optimized scoop profiles that successfully avoid discontinuities and reversals in curvature. The use of Bezier curves also allows for the creation of unique optimized scoop profiles very quickly. The optimized scoop preferably has a trajectories that is continuous, monotonically decreasing (no local minima), and has no sign changes in curvature, which requirements are all fulfilled by Bezier parameterization using control points. By modifying the control points of Bezier curves, different configurations of scoops can be created and modeled in order to optimize the scoop. Additionally, by performing a normal force load analysis on the scoop design to maintain smooth increases and decreases in the normal force applied to glass gobs in the scoop that are caused by the curvature, the impact of such normal forces on glass gobs may also be minimized.

It may therefore be seen that the scoop embodying the present invention improves glass gob shape as the glass gobs transit the optimized scoop. The improvements in glass gob shape are accomplished in the optimized scoop without any significant decrease in the speed of the glass gobs as they transit the glass gob delivery system. The improvements in glass gob shape in the optimized scoop thus enhance glass gob shape to produce a more uniformly cylindrical glass gobs and eliminate the dog-bone shape, while the optimized trajectory of the optimized scoop prevents any significant reduction in the speed of the glass gobs such that they maintain a sufficient exit velocity from the optimized scoop. Further, the improvement in glass gob shape is accomplished in the optimized scoop without significantly lengthening the glass gobs.

The optimized scoop is capable of a construction which is both durable and long lasting, and which will require little or no maintenance to be provided by the user throughout its operating lifetime. The optimized scoop is also capable of inexpensive construction to enhance its market appeal and to thereby afford it the broadest possible market. Finally, the aforesaid advantages and objectives of the optimized scoop are capable of being achieved without incurring any substantial relative disadvantage.

Reference will now be made to the accompanying drawings, in which:

Fig. 1 is a side view of a generic glass gob delivery system for supplying a glass gob to a parison mold, showing a scoop, a trough, and a deflector;

FIG. 2 is a side view showing the configuration of a glass gob supplied by the scoop of a conventional glass gob delivery system;

FIG. 3 is an isometric view of an optimized scoop embodying the present invention from above and one side of the optimized scoop showing the taper from the top end to the bottom end thereof;

FIG. 4 is a plan view of the upper end of the optimized scoop illustrated in FIG. 3, showing the cross-sectional configuration of the optimized scoop at the upper end thereof;

FIG. 5 is a plan view of the lower end of the optimized scoop illustrated in FIGS. 3 and 4, showing the cross-sectional configuration of the optimized scoop at the lower end thereof;

FIG. 6 is a cross-sectional view of the optimized scoop illustrated in FIGS. 3 and 4, showing the scoop trajectory that is defined by an optimized Bezier curve;

FIG. 7 is an exploded bottom plan view showing the fluid cooling passageway located within the optimized scoop illustrated in FIG. 3 prior to the covers being welded to enclose the fluid cooling passageway;

FIG. 8 is an examplary Bezier curve showing the four control points that define a Bezier curve;

FIG. 9 is a Bezier curve family for optimization of the scoop trajectory of the optimized scoop illustrated in 3 through 7;

FIG. 10 is a series of plots showing the normal force applied to a glass gob passing through the optimized scoop illustrated in 3 through 5 for several different initial velocities as the glass gob enters the optimized scoop; and

FIG. 11 is a side view showing the configuration of a glass gob supplied by the optimized scoop of the present invention.

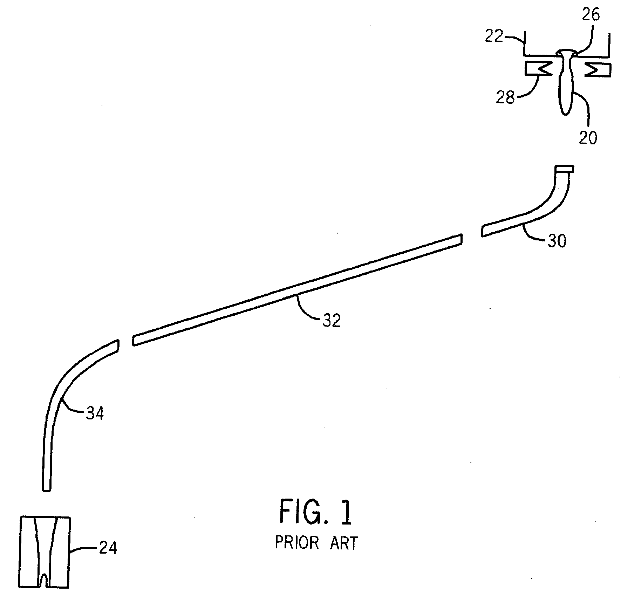

Prior to discussing the exemplary embodiment of the present invention, it is helpful to briefly describe the location and function of a scoop in a generic glass gob delivery system used to supply glass gobs to an I.S. machine. Referring to FIG. 1, such a glass gob delivery system is illustrated in schematic form depicting the gravitational delivery of a glass gob 20 from a gob feeder 22 to a parison mold 24. Molten glass exits the gob feeder 22 through an orifice 26 in the bottom of the gob feeder 22, and is cut by a schematically depicted glass gob shear mechanism 28 into a sequence of glass gobs 20.

The glass gobs 20 fall downwardly into the top end of a scoop 30 that is curved to redirect the glass gobs 20 from a vertical trajectory to a diagonal trajectory, and from the bottom end of the scoop 30 into the upper end of an inclined trough 32. From the lower end of the trough 32, the glass gobs 20 are directed into the top end of a deflector 34 that is curved to redirect the glass gobs 20 from the diagonal trajectory back to a vertical trajectory above the parison mold 24. From the lower end of the deflector 34, the glass gobs 20 fall into the open top side of the parison mold 24.

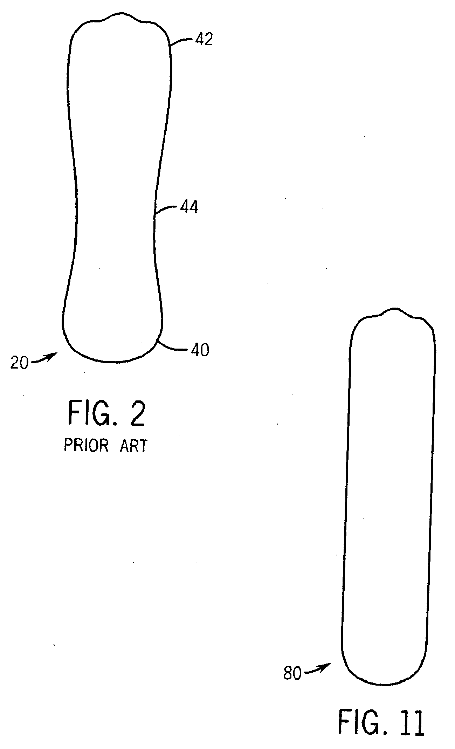

Referring next to FIG. 2, a glass gob 20 supplied from the scoop 30 of a conventional glass gob delivery system is shown. It may be seen that the glass gob 20 has an enlarged lower portion 40 as well as an enlarged upper portion 42, with a narrowed intermediate portion 44 located therebetween (the degree of the narrowing at the narrowed intermediate portion 44 of the glass gob 20 has been somewhat exaggerated for purposes of clarity). Since the molten glass flowing out of the orifice 26 in the gob feeder 22 (shown in FIG. 1) is very fluid, as the glass gob 20 (as shown in FIG. 1) drops through gravity, it begins to break away in the middle, producing the shape shown in FIG. 1, which is referred to in the industry as a "dog-bone" shape. This dog-bone shape, which is present at the glass gob shear mechanism, is maintained by glass gobs 20 as they go through a conventional glass gob delivery system, and is one cause of improper gob loading in the parison mold 24 (shown in FIG. 1).

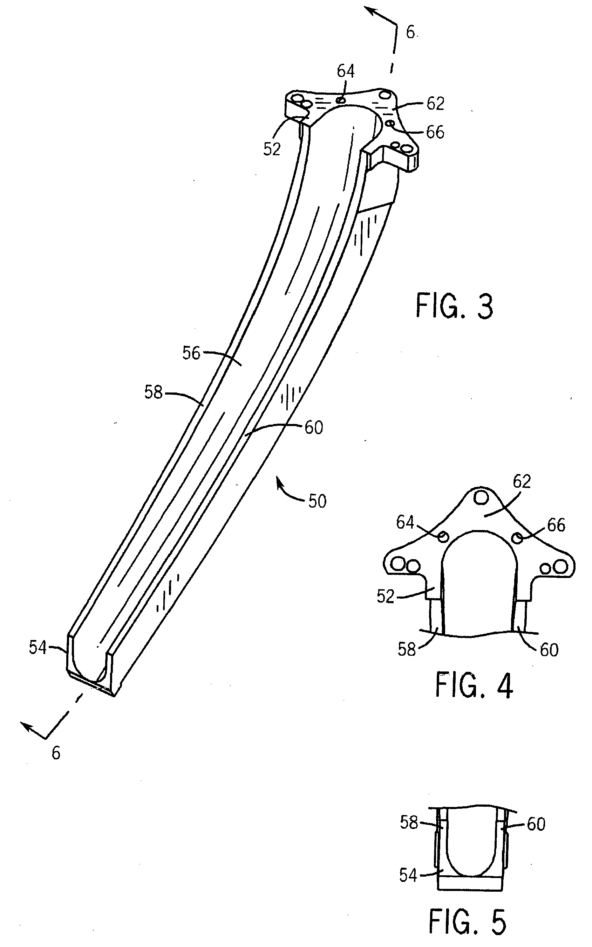

Referring now to FIGS. 3 through 7, an optimized scoop 50 that is constructed according to the teachings of the present invention is shown. The scoop has an upper end 52 and a lower end 54 with a smooth curved portion 56 extending therebetween. The optimized scoop 50 will be mounted so that the upper end 52 of the optimized scoop 50 will act as an inlet to the optimized scoop 50, receiving glass gobs (not shown in FIGS. 3 through 7) which will fall through the force of gravity vertically into the upper end 52 of the optimized scoop 50. The curved portion 56 of the optimized scoop 50 will modify the trajectory of the glass gobs such that they will exit the optimized scoop 50 at the lower end 54 of the optimized scoop 50 at an acute angle with respect to the horizontal that delivers the glass gobs to the trough 32 (shown in FIG. 1) with the proper trajectory (which, by way of example, may be approximately thirty degrees, but may vary as desired to accommodate any glass gob delivery system).

The cross-sectional configuration of the optimized scoop 50 is generally concave (in a two-dimensional sense) and preferably U-shaped, with the bottom of the U-shape preferably being semicircular and the opposite sides 58 and 60 of the optimized scoop 50 above the semicircle preferably being essentially parallel along the curved portion 56 of the optimized scoop 50. It should be noted that these characteristics may vary somewhat without departing from the teachings of the present invention (and thus could potentially include a more V-shaped configuration as well). The width of the semicircular bottom of the U-shape preferably varies along the curved portion 56 of the optimized scoop 50 from a maximum width at the upper end 52 of the optimized scoop 50 to a minimum width at the lower end 54 of the optimized scoop 50 to thereby produce a tapered width along the length of the curved portion 56 of the optimized scoop 50.

The optimized scoop 50 has a mounting flange 62 located at the upper end 52 of the optimized scoop 50, with this mounting flange 62 being used to support the optimized scoop 50 in position in a glass gob delivery system. Located in the mounting flange 62 are a cooling fluid inlet 64 and a cooling fluid outlet 66, which will be used to couple a cooling fluid into and out of the optimized scoop 50. It should be noted that 64 and 66 could also be reversed if so desired.

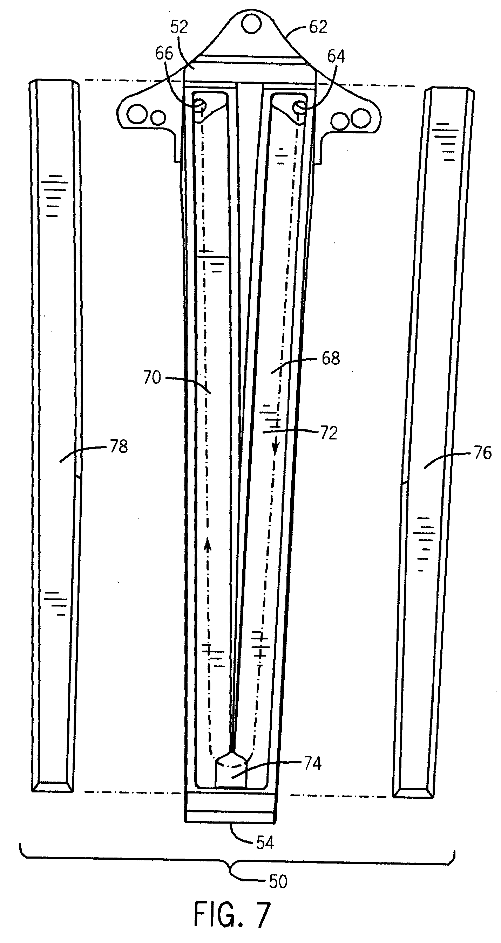

Located within the optimized scoop 50 and visibly from the underside thereof (best shown in FIG. 7) are two parallel cooling channels 68 and 70 which extend nearly the entire length of the optimized scoop 50. The end of the cooling channel 68 near the upper end 52 of the optimized scoop 50 is in fluid communication with the cooling fluid inlet 64, and the end of the cooling channel 70 near the upper end 52 of the optimized scoop 50 is in fluid communication with the cooling fluid outlet 66. The cooling channels 68 and 70 are separated by a V-shaped rib 72. The cooling channels 68 and 70 are connected together by a channel 74 located near the lower end 54 of the optimized scoop 50.

A curved panel 76 is placed over the cooling channel 68 and welded in place on the optimized scoop 50 to enclose the cooling channel 68. Likewise, a curved panel 78 is placed over the cooling channel 70 and welded in place on the optimized scoop 50 to enclose the panel 78. Thus, it will be appreciated by those skilled in the art that water or some other cooling fluid may be pumped through the cooling channels 68 and 70 inside the optimized scoop 50 to prevent the molten glass gobs from overheating it.

The optimized scoop 50 may be machined in a single piece (with the exception of the panels 76 and 78) of aluminum, stainless steel, or titanium. While stainless steel and titanium may be used without a coating, aluminum requires a plasma spray coating of a commercially available ceramic material such as those available from Praxair Surface Technologies, Inc. to prevent the glass gobs from sticking to the aluminum surface. Titanium has essentially the same characteristics as stainless steel, but also features significantly reduced weight.

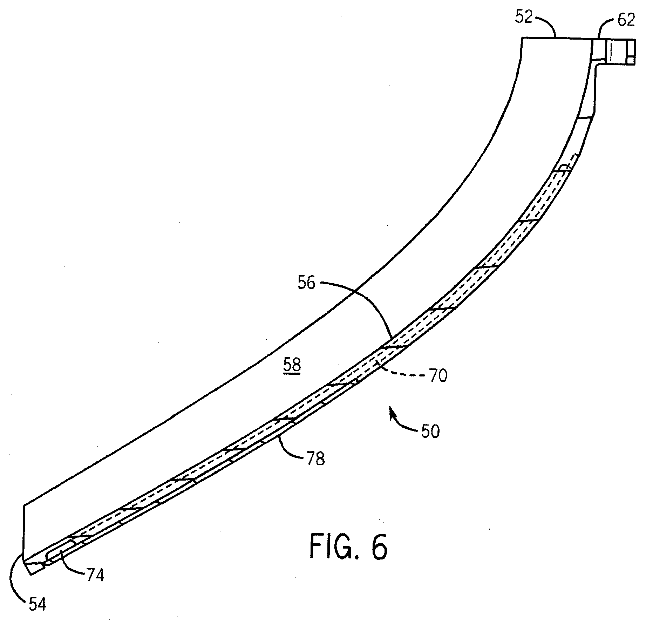

Referring now principally to FIGS. 3 and 6, in a preferred embodiment, the width of the semicircular bottom of the U-shape varies linearly along the curved portion 56 of the optimized scoop 50, from the maximum width at the upper end 52 of the optimized scoop 50 to the minimum width at the lower end 54 of the optimized scoop 50. The width at the lower end 54 of the optimized scoop 50 is selected to be smaller than the largest diameter of the glass gobs at the enlarged lower portion 40 of the glass gob 20 (shown in FIG. 2) and the enlarged upper portion 42 of the glass gob 20 (shown in FIG. 2) so that the optimized scoop 50 will act to shape glass gobs passing therethrough.

For example, for a glass gob having the enlarged lower portion 40 of the glass gob 20 (shown in FIG. 2) and the enlarged upper portion 42 of the glass gob 20 (shown in FIG. 2) both having diameters of approximately 32 millimeters, and the narrowed intermediate portion 44 of the glass gob 20 (shown in FIG. 2) having a diameter of approximately 30 millimeters, the width at the lower end 54 of the optimized scoop 50 is selected to be approximately the same size as the diameter of the narrowed intermediate portion 44 of the glass gob 20, or approximately 30 millimeters. The diameter of the lower end of the scoop may thus be, or be approximately, 6.25 percent less, or no more than 6.25 percent less than the diameter of the enlarged upper or lower portion of the gob, which may in turn be, or be approximately, the diameter of the orifice 26 of the gob feeder 22. For this example, the width at the upper end 52 of the optimized scoop 50 may be approximately 46.5 millimeters.

While those skilled in the art will recognize that these dimensions may be varied considerably without departing from the spirit of the present invention, it is important that the width of the lower end 54 of the optimized scoop 50 must be slightly smaller than the width of at least one of the enlarged lower portion 40 of the glass gob 20 and the enlarged upper portion 42 of the glass gob 20 in order to extrude the glass gobs to more cylindrical configurations without greatly lengthening them. Optimally, the tapering in the optimized scoop 50 and the width of the lower end 54 of the optimized scoop 50 should be selected to optimize the shape of glass gobs passing through the optimized scoop 50 without either unduly lengthening them or significantly reducing the transit speed of glass gobs through the optimized scoop 50. Typically, the glass gobs may be lengthened as much as approximately twenty percent without incurring any significant disadvantage through so doing.

It will be recognized by those skilled in the art that while obtaining an improved glass gob shape through the use of a tapering cross-section in the curved portion 56 of the optimized scoop 50 is highly beneficial, it necessarily will result in at least some degree of slowing of the glass gobs as they pass through the optimized scoop 50. Thus, it is both desirable and  beneficial to provide an optimized curvature to the curved portion 56 of the optimized scoop 50 between the upper end 52 of the optimized scoop 50 and the lower end 54 of the optimized scoop 50 in order to obtain the highest possible transit speed of the glass gobs as they exit the optimized scoop 50. This curvature of the curved portion 56 of the optimized scoop 50 must be smooth and avoid discontinuities and reversals in curvature.

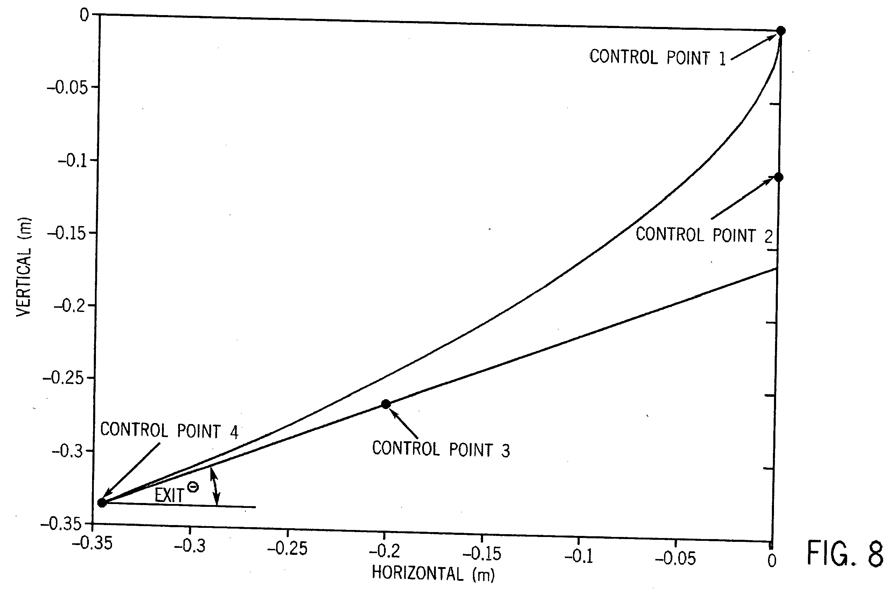

It has been discovered that an advantageous way of facilitating such an optimized curve in the curved portion 56 of the optimized scoop 50 between the upper end 52 of the optimized scoop 50 and the lower end 54 of the optimized scoop 50 is through the use of Bezier curves. In the approach used by the optimized scoop 50 of the present invention, Bezier curves are used to represent the trajectory of the optimized scoop 50, as shown in FIG. 8. Specifically, four control points (each with two coordinates for a total of eight adjustable parameters) are used to generate the curvature of the optimized scoop 50 which defines the trajectory of glass gobs passing therethrough. Two of these control points (Control Point 1 and Control Point 4) are the starting point and the end point of the optimized scoop 50, respectively, which are fixed (to thereby reduce the number of adjustable parameters to eight, two coordinates for each of the two remaining control points). The other two control points (Control Point 2 and Control Point 3) may be varied to change the overall shape of the curvature of the optimized scoop 50.

Since the glass gobs enter the optimized scoop 50 falling vertically due to gravity, Control Point 2 is along the vertical axis below Control Point 1. Since the trajectory at which glass gobs leave the optimized scoop  50 (for the trough 32 shown in FIG. 1) is defined by an acute angle e measured with respect to the horizontal axis, Control Point 3 will be along a line displaced at the acute angle e from the horizontal axis. By limiting the locations of Control Point 2 and Control Point 3 to their respective axes, the adjustability of the control points is limited to two parameters. By varying the relative positions of Control Point 2 and Control Point 3 on their respective axes, the overall shape of the curvature or trajectory of the optimized scoop 50 may be varied. The curve is given by the formula:

$$p(z) = (1-z)^3 c_4 + 3(1-z)^2 z c_3 + 3(1-z)z^2 c_2 + z^3 c_1 \quad \text{with} \quad 0 \leq z \leq 1$$

The resulting trajectory is always tangent to the line extending between Control Point 1 and Control Point 2 at Control Point 1, and is always tangent to the line extending between Control Point 4 and Control Point 3 at Control Point 4. As the length of the line from Control Point 1 to Control Point 2 is increased, the trajectory will tend to maintain its initial slope and "stick" to the line from Control Point 1 to Control Point 2 longer. Similarly, as the length of the line from Control Point 4 to Control Point 3 is increased, the trajectory will tend to become approximately tangent to the line from Control Point 4 to Control Point 3 sooner, "sticking" to the line from Control Point 4 to Control Point 3 sooner.

By appropriately limiting the allowable selection of Control Point 2 and Control Point 3, the curve connecting Control Point 1 and Control Point 4 can be made to be well behaved. Specifically, the amount that Control Point 2 and Control Point 3 can move is limited by not allowing them to move beyond points where  the curvature changes sign. If Control Point 2 is kept above the intersection of its vertical axis and the line including Control Point 4 and Control Point 3 that defines the exit angle, the curvature will not change sign. If Control Point 3 is not allowed to move to the right of the intersection of the line including Control Point 4 and Control Point 3 that defines the exit angle and the vertical axis below Control Point 1, the curvature will not change sign.

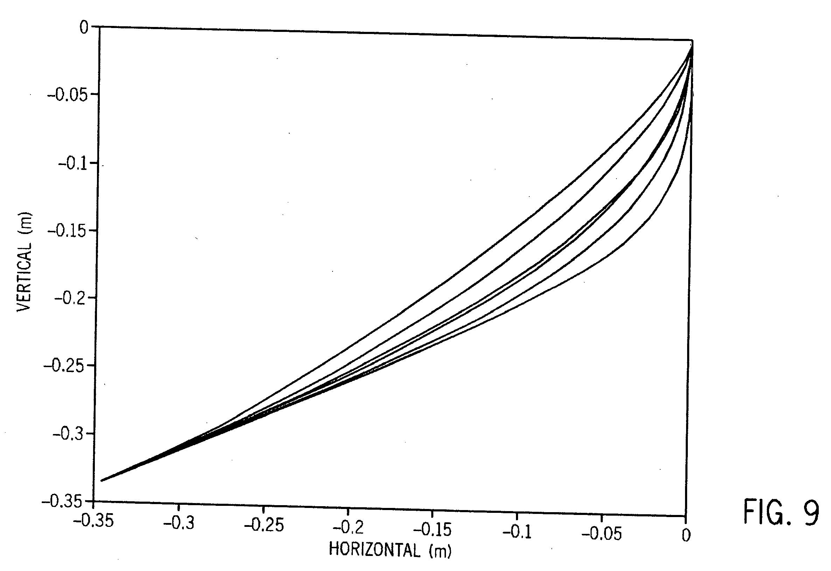

Referring now to FIG. 9, six exemplary potential trajectories for the optimized scoop 50 are illustrated. The optimum trajectory for the optimized scoop 50 is one that optimizes the exit velocity of glass gobs from the optimized scoop 50 while maintaining elongation of the glass gobs within an acceptable range. By performing a mathematical analysis referred to as computational fluid dynamics on each of these trajectory profiles, the effects the each of these different trajectory profiles have on glass gob exit velocity and glass gob elongation may be determined. Several different trajectory profiles may have glass gob exit velocities that are quite similar and other ways of identifying an optimal trajectory profile may be pursued.

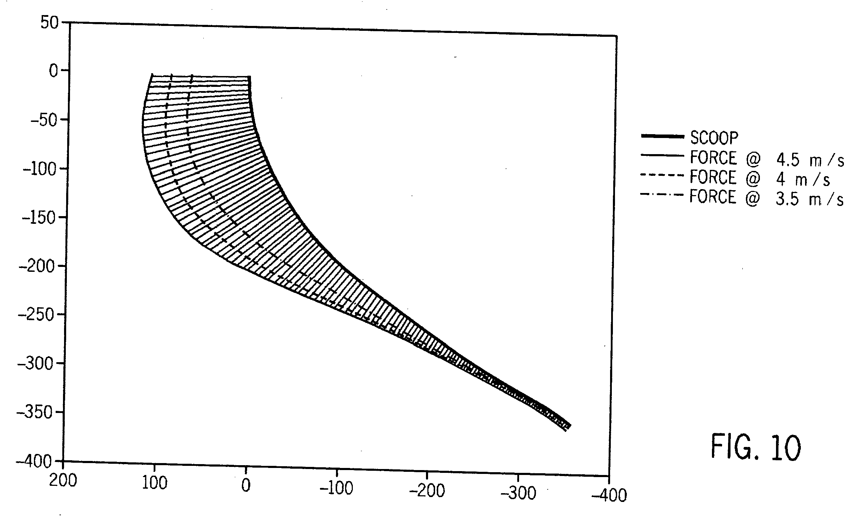

One such alternative manner of identifying an optimal trajectory profile is the use of normal force analysis, an example of which is illustrated in FIG. 10. This analysis determines the normal load on a glass gob entering the scoop at a predetermined velocity. The goal is to ensure a smooth and consistent normal force pattern and minimized peak normal load applied on glass gobs passing through the optimized scoop 50, while maintaining a smooth increase and decrease in the normal force. With gradual increases and decreases in the normal force, the curvature of the optimized scoop 50 should have less of an impact on glass gob shape. With a minimized normal force, less friction should be expected between the glass gobs and the optimized scoop 50, which means a minimal influence on glass gob deformation, speed, and elongation.

FIG. 10 shows a trajectory profile of the optimized scoop 50, with three curves depicting the normal force as given points on the optimized scoop 50 for three different initial glass gob velocities (as the glass gob enters the optimized scoop 50). The centripetal force is calculated by the following equation, where $m$ is the mass of the glass gob, $v$ is the velocity of the glass gob, and $r$ is the radius of curvature of the optimized scoop 50 at the particular point:

$$F = \frac{m * v^2}{r}$$

As the glass gob goes around the curvature of the optimized scoop 50, the centripetal force increases, which leads to elongation of the glass gob. (This is why glass gob elongation is only seen on scoops and deflectors, not on troughs, since it is the centripetal force on the glass gob that causes it to elongate.) By applying this normal force analysis approach, a trajectory profile chosen based upon a computational fluid dynamics result may be verified. An optimum trajectory for the optimized scoop 50 will have a smooth increase in the centripetal force, while reducing the maximum normal force to which the glass gob will be subjected to an acceptable level. The optimum trajectory for the optimized scoop 50 generated by employing Bezier curve generation and this normal force analysis approach has been determined to present congruency with the computational fluid dynamics analysis. The optimized scoop 50 presents impressive results when compared to previously known scoops: no significant loss of velocity (and possibly a slight increase in velocity), a substantially improved glass gob shape, and a negligible increase in glass gob length.

It may therefore be appreciated from the above detailed description of the preferred embodiment of the present invention that it teaches an optimized scoop that is capable of improving glass gob shape as the glass gobs transit the optimized scoop. The improvements in glass gob shape are capable of being accomplished in the optimized scoop without any significant decrease in the speed of the glass gobs in the glass gob delivery system. The improvements in glass gob shape in the optimized scoop are thus capable of enhancing glass gob shape to produce more uniformly cylindrical glass gobs and alleviating or effectively eliminating the dog-bone shape while maintaining a sufficient exit velocity from the optimized scoop. Further, the improvement in glass gob shape is capable of being accomplished in the optimized scoop without significantly lengthening the glass gobs.

The optimized scoop is capable of a construction which is both durable and long lasting, and which will require little or no maintenance to be provided by the user throughout its operating lifetime. The scoop is also capable of inexpensive construction to enhance its market appeal and to thereby afford it the broadest possible market. Finally, the aforesaid advantages and objectives of the optimized scoop embodying the present invention are capable of being achieved without incurring any substantial relative disadvantage.

**Claims**

1. A scoop (50) for conveying gobs (20) of molten glass falling vertically under the influence of gravity into said scoop to an ensuing gob delivery apparatus (32,34) that receives gobs from said scoop at an angular trajectory for delivery by the ensuing gob delivery apparatus to a parison mold, said scoop comprising:

   an inlet end (52) of said scoop into which the gobs fall vertically under the influence of gravity;

an outlet end (54) of said scoop from which the gobs are directed at an angular trajectory for delivery to the ensuing gob delivery apparatus; and

a curved portion (56) of said scoop located between said inlet end of said scoop and said outlet end of said scoop; wherein said scoop has a cross-sectional configuration that is concave and has a first width at said inlet end (52) of said scoop and a second width at said outlet end (54) of said scoop;

**characterized in that**:

said scoop (50) is configured to receive and convey gobs (20), each dimensioned to be used in forming a selected container;

said scoop has a U-shaped cross-sectional configuration with a semi-circular bottom and opposite sides (58,60) above the semi-circular bottom that are approximately parallel;

said second width at said outlet end (54) of said scoop is the width between said opposite sides (58,60) and is smaller than the largest diameter portion (40 or 42) of gobs (20) entering said inlet end (52) of said scoop; and

said scoop is gradually tapered in a direction from the inlet end (52) towards the outlet end (54).

2. A scoop as defined in claim 1, wherein said curved portion (56) of said scoop is configured to modify the trajectory of gobs such that they will exit the scoop at the outlet end (54) thereof at an acute angle with respect to the horizontal.

3. A scoop as defined in claim 2, wherein said acute angle is approximately thirty degrees.

4. A scoop as defined in claim 1, 2 or 3, wherein the U-shaped cross-sectional configuration of said scoop has a width between said opposite sides (58,60) that tapers along said curved portion (56) of said scoop from said inlet end (52) of said scoop to said outlet end (54) of said scoop.

5. A scoop as defined in claim 4, wherein the U-shaped cross-sectional configuration of said scoop has a tapered width between said opposite sides (58,60) along said curved portion (56) of said scoop that is selected to optimize the shape of gobs passing through said scoop without either lengthening the gobs (20) by more than 20% or significantly reducing the transit speed of gobs as they pass through said scoop.

6. A scoop as defined in claim 4 or 5, wherein the U-shaped cross-sectional configuration of said scoop has a width between said opposite sides (58, 60) that tapers linearly along said curved portion (56) of said scoop from said inlet end (52) of said scoop to said outlet end (54) of said scoop.

7. A scoop as defined in any preceding claim, wherein the gobs (20) have a "dog-bone" configuration as they fall vertically into said inlet end (52) of said scoop, the gobs having larger diameters (40,42) near top and bottom ends thereof and a smaller diameter (44) at an intermediate portion thereof, wherein said second width is smaller than at least one of the larger diameters (40,42) of the glass gobs near the top and bottom ends thereof.

8. A scoop as defined in any preceding claim, additionally comprising:

a mounting flange (62) located at said inlet end (52) of said scoop, said mounting flange being configured to support said scoop in position in a glass gob delivery system.

9. A scoop as defined in any preceding claim, additionally comprising:

a cooling channel (68, 70) located inside said scoop to provide cooling by circulating a cooling fluid through said cooling channel.

10. A scoop as defined in any preceding claim, wherein said scoop is made of a material selected from the group consisting of aluminum, stainless steel, and titanium.

11. A scoop as defined in any preceding claim, wherein the curvature of said curved portion (56) of said scoop is smooth and avoids discontinuities and reversals in curvature in order to obtain the highest possible transit speed of gobs as they pass through said scoop.

12. A scoop as defined in any preceding claim, wherein the curvature of said curved portion (56) of said scoop is defined by a Bezier curve.

**13.** A scoop as defined in claim 12, wherein said Bezier curve is optimized to maximize the exit velocity of gobs from said outlet end (54) of said scoop while maintaining elongation of the gobs within an acceptable range.

**14.** A scoop as defined in claim 12 or 13, wherein said Bezier curve is optimized through the use of normal force analysis to ensure a smooth and consistent normal force pattern and minimized peak normal load applied to gobs passing through said scoop, while maintaining a smooth increase and decrease in the normal force.

**15.** A scoop as defined in claim 12, 13 or 14, wherein said Bezier curve has respective end points $C_1$ and $C_2$ and respective control points $C_3$ and $C_4$, and wherein a curve defining said curved portion of said scoop is defined by the formula:

$$p(z) = (1-z)^3 c_4 + 3(1-z)^2 z c_3 + 3(1-z) z^2 c_2 + z^3 c_1 \quad \text{with} \quad 0 \le z \le 1.$$

**16.** An Individual Section machine for making glassware, including:

    a gob feeder (22);
    a gob delivery apparatus (32, 34); and
    a scoop (50) as defined in any of claims 1 to 15, for conveying gobs (20) of molten glass from an inlet end (52) of said scoop into which the gobs fall vertically from said gob feeder (22) under the influence of gravity to an outlet end (54) of said scoop from which the gobs are directed at an angular trajectory for delivery to said gob delivery apparatus that delivers the gobs to a parison mold of the machine.

**17.** A method for conveying gobs (20) of molten glass falling vertically under the influence of gravity into a scoop (50) to an ensuing gob delivery apparatus (32, 34) that receives gobs from the scoop at an angular trajectory for delivery by the ensuing gob delivery apparatus to a parison mold, said method comprising:

    feeding the gobs (20) so that they fall vertically under the influence of gravity into an inlet end (52) of the scoop (50);
    guiding the gobs through a curved portion (56) of the scoop located between the inlet end (52) of the scoop and an outlet end (54) of the scoop, the scoop having a cross-sectional configuration that is concave and has a first width at the inlet end (52) of the scoop and a second width at the outlet end (54) of the scoop; and
    directing the gobs from the outlet end (54) of the scoop at an angular trajectory to the ensuing gob delivery apparatus;
    **characterized in that**:

    the scoop (50) is configured to receive and convey gobs (20), each dimensioned to be used in forming a selected container;
    the scoop has a U-shaped cross-sectional configuration with a semi-circular bottom and opposite sides (58,60) above the semi-circular bottom that are approximately parallel;
    the second width at said outlet end (54) of the scoop is the width between said opposite sides (58,60) and is smaller than the largest diameter portion (40 or 42) of gobs entering the inlet end (52) of the scoop; and
    the scoop is gradually tapered in a direction from the inlet end (52) towards the outlet end (54).

**Patentansprüche**

**1.** Kelle (50) zum Befördern von Tropfen (20) geschmolzenen Glases, die vertikal unter Schwerkrafteinfluss in die Kelle fallen, zu einer darauffolgenden Tropfenabgabevorrichtung (32, 34), die die Tropfen in einer abgewinkelten Bahn zur Abgabe durch die darauffolgende Tropfenabgabevorrichtung an eine Külbelform aufnimmt, wobei die Kelle ein Einlassende (52) der Kelle umfasst, in das die Tropfen vertikal unter Schwerkrafteinfluss fallen; sowie ein Auslassende (54) der Kelle, aus dem die Tropfen in einer abgewinkelten Bahn zur Abgabe an die darauffolgende Tropfenabgabevorrichtung geleitet werden; und einen gekrümmten Abschnitt (56) der Kelle, der sich zwischen dem Einlassende der Kelle und dem Auslassende der Kelle befindet; wobei die Kelle eine Querschnittskonfiguration aufweist, die konkav ist und eine erste Breite am Einlassende (52) der Kelle und eine zweite Breite am Auslassende (54) der Kelle aufweist; **dadurch gekennzeichnet, dass**

die Kelle (50) so konfiguriert ist, dass sie Tropfen (20) aufnimmt und befördert, von denen jeder so dimensioniert ist, dass er zum Formen eines ausgewählten Behälters verwendet wird;

die Kelle eine U-förmige Querschnittskonfiguration mit einem halbkreisförmigen Boden und gegenüberliegenden Seiten (58, 60) oberhalb des halbkreisförmigen Bodens hat, die annähernd parallel verlaufen;

die zweite Breite am Auslassende (54) der Kelle die Breite zwischen den gegenüberliegenden Seiten (58 60) ist und kleiner ist als der größte Durchmesserabschnitt (40 oder 42) der Tropfen (20), die in das Einlassende (52) der Kelle eintreten; und

die Kelle graduell in einer Richtung vom Einlassende (52) zum Auslassende (54) hin verjüngt ist.

2. Kelle nach Anspruch 1, wobei der gekrümmte Abschnitt (56) der Kelle so konfiguriert ist, dass die Bahn der Tropfen auf eine solche Weise modifiziert wird, dass sie die Kelle am Auslassende (54) in einem spitzen Winkel in Bezug auf die Horizontale verlassen.

3. Kelle nach Anspruch 2, wobei der spitze Winkel ungefähr 30° beträgt.

4. Kelle nach Anspruch 1, 2 oder 3, wobei die U-förmige Querschnittskonfiguration der Kelle eine Breite zwischen den gegenüberliegenden Seiten (58, 60) hat, die entlang des gekrümmten Abschnittes (56) der Kelle vom Einlassende (52) der Kelle zum Auslassende (54) der Kelle hin verjüngt ist.

5. Kelle nach Anspruch 4, wobei die U-förmige Querschnittskonfiguration der Kelle eine verjüngte Breite zwischen den gegenüberliegenden Seiten (58, 60) entlang des gekrümmten Abschnittes (56) der Kelle aufweist, die so gewählt ist, dass die Form der Tropfen, die durch die Kelle laufen, optimiert wird, ohne dass die Tropfen (20) um mehr als 20 % verlängert werden oder dass die Durchlaufgeschwindigkeit der Tropfen, wenn sie durch die Kelle laufen, wesentlich verringert wird.

6. Kelle nach Anspruch 4 oder 5, wobei die U-förmige Querschnittskonfiguration der Kelle eine Breite zwischen den gegenüberliegenden Seiten (58, 60) hat, die linear entlang des gekrümmten Abschnittes (56) der Kelle vom Einlassende (52) der Kelle zum Auslassende (54) der Kelle hin verjüngt ist.

7. Kelle nach einem der vorangegangenen Ansprüche, wobei die Tropfen (20) eine "Hundeknochen"-Konfiguration haben, wenn sie vertikal in das Einlassende (52) der Kelle fallen, wobei die Tropfen in der Nähe ihrer Ober- und Unterenden größere Durchmesser (40, 42) haben und in einem Zwischenbereich einen kleineren Durchmesser (44), wobei die zweite Breite kleiner ist als mindestens einer der ersten Durchmesser (40, 42) der Glastropfen in der Nähe der Ober- und Unterenden.

8. Kelle nach einem der vorangegangenen Ansprüche, weiterhin umfassend
einen Befestigungsflansch (62), der sich am Einlassende (52) der Kelle befindet, wobei der Befestigungsflansch so konfiguriert ist, dass er die Kelle in einem Glastropfenabgabesystem in ihrer Position hält.

9. Kelle nach einem der vorangegangenen Ansprüche, weiterhin umfassend
einen Kühlkanal (58, 60), der sich innerhalb der Kelle befindet und zum Kühlen dient, indem eine Kühlflüssigkeit durch den Kühlkanal umgewälzt wird.

10. Kelle nach einem der vorangegangenen Ansprüche, wobei die Kelle aus einem Material besteht, das aus der Gruppe ausgewählt ist, die Aluminium, Edelstal und Titan umfasst.

11. Kelle nach einem der vorangegangenen Ansprüche, wobei die Krümmung des gekrümmten Abschnittes (56) der Kelle sanft ist und Unterbrechungen und Umkehrungen in der Krümmung vermeidet, um die größtmögliche Durchlaufgeschwindigkeit der Tropfen zu erzielen, wenn sie durch die Kelle laufen.

12. Kelle nach einem der vorangegangenen Ansprüche, wobei die Krümmung des gekrümmten Abschnittes (56) der Kelle durch eine Bezier-Kurve bestimmt ist.

13. Kelle nach Anspruch 12, wobei die Bezier-Kurve optimiert ist, um die Austrittsgeschwindigkeit der Tropfen aus dem Auslassende (54) der Kelle zu maximieren, während die Verlängerung der Tropfen innerhalb eines akzeptablen Bereiches gehalten wird.

14. Kelle nach Anspruch 12 oder 13, wobei die Bezier-Kurve durch die Verwendung von Normalkraftanalyse optimiert ist, um ein sanftes und konsistentes Normalkraftmuster sowie eine minimierte Spitzennormallast sicherzustellen, mit der die Tropfen, die durch die Kelle laufen, beaufschlagt werden, während ein sanfter Anstieg und Abfall in der Normalkraft aufrechterhalten wird.

15. Kelle nach Anspruch 12,13 oder 14, wobei die Bezier-Kurve jeweils Endpunkte $c_1$ und $c_2$ und jeweils Kontrollpunkte $c_3$ und $c_4$ hat, und wobei eine Kurve, die den gekrümmten Abschnitt der Kelle definiert, durch die folgende Formel definiert ist:

$$p(z) = (1 - z)^3 c_4 + 3(1 - z)^2 z c_3 + 3(1 - z) z^2 c_2 + z^3 c_1 \text{ mit } 0 \leq z \leq 1.$$

16. IS-Maschine zum Herstellen von Glaswaren, umfassend
einen Tropfenspender (22);
eine Tropfenabgabevorrichtung (32, 34); und
eine Kelle (50) nach einem der Ansprüche 1 bis 15 zum Liefern von Tropfen (20) geschmolzenen Glases von einem Einlassende (52) der Kelle, in die die Tropfen vertikal vom Tropfenspender (22) unter dem Einfluss von Schwerkraft fallen, zu einem Auslassende (54) der Kelle, aus dem die Tropfen in einer abgewinkelten Bahn zur Abgabe an die Tropfenabgabevorrichtung geleitet werden, die die Tropfen an eine Külbelform der Maschine abgibt.

17. Verfahren zum Fördern von Tropfen (20) geschmolzenen Glases, die vertikal unter dem Einfluss von Schwerkraft in eine Kelle (50) fallen, an eine darauffolgende Tropfenabgabevorrichtung (32, 34), die die Tropfen von der Kelle in einer abgewinkelten Bahn zur Abgabe durch die darauffolgende Tropfenabgabevorrichtung an eine Külbelform empfängt, wobei das Verfahren die folgenden Schritte umfasst:

Zufuhr der Tropfen (20), so dass sie vertikal unter dem Einfluss von Schwerkraft in ein Einlassende (52) der Kelle (50) fallen;
Führen der Tropfen durch einen gekrümmten Abschnitt (56) der Kelle, der sich zwischen dem Einlassende (52) der Kelle und einem Auslassende (54) der Kelle befindet, wobei die Kelle eine Querschnittskonfiguration hat, die konkav ist und eine erste Breite an einem Einlassende (52) der Kelle sowie eine zweite Breite an einem Auslassende (54) der Kelle aufweist; und
Führen der Tropfen vom Auslassende (54) der Kelle in einer abgewinkelten Bahn zur darauffolgenden Tropfenabgabevorrichtung;
**dadurch gekennzeichnet, dass**
die Kelle (50) so konfiguriert ist, dass sie Tropfen (20) aufnimmt und befördert, von denen jeder so dimensioniert ist, dass er zum Formen eines ausgewählten Behälters verwendet wird;
die Kelle eine U-förmige Querschnittskonfiguration mit einem halbkreisförmigen Boden und gegenüberliegenden Seiten (58, 60) oberhalb des halbkreisförmigen Bodens hat, die annähernd parallel verlaufen;
die zweite Breite am Auslassende (54) der Kelle die Breite zwischen den gegenüberliegenden Seiten (58 60) ist und kleiner ist als der größte Durchmesserabschnitt (40 oder 42) der Tropfen (20), die in das Einlassende (52) der Kelle eintreten; und
die Kelle graduell in einer Richtung vom Einlassende (52) zum Auslassende (54) hin verjüngt ist.

**Revendications**

1. Pelle (50) pour acheminer des paraisons (20) de verre fondu tombant verticalement sous l'effet de la gravité dans ladite pelle vers un appareil aval de déchargement de paraisons (32, 34) qui reçoit des paraisons de ladite pelle selon une trajectoire angulaire pour déchargement par l'appareil aval de déchargement de paraisons vers un moule de paraisons, ladite pelle comprenant : une extrémité d'admission (52) de ladite pelle dans laquelle les paraisons tombent verticalement sous l'effet de la gravité ; une extrémité de sortie (54) de ladite pelle à partir de laquelle les paraisons sont dirigés selon une trajectoire angulaire pour déchargement à l'appareil aval de déchargement de paraisons ; et une portion courbe (56) de ladite pelle située entre ladite extrémité d'admission de ladite pelle et ladite extrémité de sortie de ladite pelle ; dans laquelle ladite pelle a une configuration transversale qui est concave et a une première largeur à ladite extrémité d'admission (52) de ladite pelle et une deuxième largeur à ladite extrémité de sortie (54) de ladite pelle ; **caractérisée en ce que** ladite pelle (50) est configurée pour recevoir et acheminer des paraisons (20), chacun dimensionné pour être utilisé en formant un conteneur choisi ; ladite pelle a une configuration transversale en forme de U avec un fond semi-circulaire et des côtés opposés (58, 60) au-dessus du fond semi-circulaire qui sont approximativement parallèles ; ladite deuxième largeur à ladite extrémité de sortie (54) de ladite pelle est la largeur entre lesdits côtés opposés (58, 60) et est plus petite que la portion à diamètre le plus grand (40 ou 42) des paraisons (20) entrant dans ladite extrémité d'admission (52) de ladite pelle ; et ladite pelle perd progressivement en largeur dans un sens depuis l'extrémité d'admission (52) vers l'extrémité de sortie (54).

2. Pelle selon la revendication 1, dans laquelle ladite portion courbe (56) de ladite pelle est configurée pour modifier la trajectoire des paraisons de telle sorte qu'ils sortiront de la pelle à l'extrémité de sortie (54) de celle-ci à angle aigu par rapport à l'horizontale.

3. Pelle selon la revendication 2, dans laquelle ledit angle aigu est approximativement de trente degrés.

4. Pelle selon la revendication 1, 2 ou 3, dans laquelle la configuration transversale en forme de U de ladite pelle a une largeur entre lesdits côtés opposés (58, 60) qui perd en largeur le long de ladite portion courbe (56) de ladite pelle depuis ladite extrémité d'admission (52) de ladite pelle vers ladite extrémité de sortie (54) de ladite pelle.

5. Pelle selon la revendication 4, dans laquelle la configuration transversale en forme de U de ladite pelle a une largeur réduite entre lesdits côtés opposés (58, 60) le long de ladite portion courbe (56) de ladite pelle qui est choisie pour optimiser la forme des paraisons passant à travers ladite pelle sans étirer les paraisons (20) de plus de 20 % ou réduire de façon conséquente la vitesse de passage des paraisons lorsqu'ils passent à travers ladite pelle.

6. Pelle selon la revendication 4 ou 5, dans laquelle la configuration transversale en forme de U de ladite pelle a une largeur entre lesdits côtés opposés (58, 60) qui perd en largeur de façon linéaire le long de ladite portion courbe (56) de ladite pelle depuis ladite entrée d'admission (52) de ladite pelle vers ladite extrémité de sortie (54) de ladite pelle.

7. Pelle selon l'une quelconque des revendications précédentes, dans laquelle les paraisons (20) ont une configuration en « os de chien » lorsqu'ils tombent verticalement dans ladite extrémité d'admission (52) de ladite pelle, les paraisons ayant des diamètres plus grands (40, 42) près de leurs extrémités supérieure et inférieure et un diamètre plus petit (44) sur leur portion intermédiaire, dans laquelle ladite deuxième largeur est plus petite qu'au moins un des plus grands diamètres (40, 42) des paraisons de verre près de leurs extrémités supérieur et inférieure.

8. Pelle selon l'une quelconque des revendications précédentes, comprenant en outre : une bride de montage (62) située à ladite extrémité d'admission (52) de ladite pelle, ladite bride de montage étant configurée pour maintenir ladite pelle en place dans un système de déchargement de paraisons de verre.

9. Pelle selon l'une quelconque des revendications précédentes, comprenant en outre : un canal de refroidissement (68, 70) situé à l'intérieur de ladite pelle pour fournir un refroidissement en faisant circuler un liquide de refroidissement à travers ledit canal de refroidissement.

10. Pelle selon l'une quelconque des revendications précédentes, dans laquelle ladite pelle est faite d'une matière choisie dans le groupe composé d'aluminium, d'acier inoxydable, et de titane.

11. Pelle selon l'une quelconque des revendications précédentes, dans laquelle la courbure de ladite portion courbe (56) de ladite pelle est régulière et évite des discontinuités et inversions dans la courbure afin d'obtenir la vitesse de passage des paraisons la plus élevée possible lorsqu'ils passent à travers ladite pelle.

12. Pelle selon l'une quelconque des revendications précédentes, dans laquelle la courbure de ladite portion courbe (56) de ladite pelle est définie par une courbe de Bézier.

13. Pelle selon la revendication 12, dans laquelle ladite courbe de Bézier est optimisée pour maximiser la vitesse de sortie des paraisons depuis ladite extrémité de sortie (54) de ladite pelle tout en maintenant l'élongation des paraisons dans une plage acceptable.

14. Pelle selon la revendication 12 ou 13, dans laquelle ladite courbe de Bézier est optimisée en utilisant l'analyse de la force normale pour garantir un modèle de force normale régulier et stable et une charge normale maximale minimisée appliquée aux paraisons passant à travers ladite pelle, tout en maintenant une augmentation et une diminution régulier dans la force normale.

**15.** Pelle selon la revendication 12, 13 ou 14, dans laquelle ladite courbe de Bézier a des points d'extrémité respectifs $c_1$ et $c_2$ et des points de contrôle respectifs $c_3$ et $c_4$, et dans laquelle une courbe définissant ladite portion courbe de ladite pelle est définie par la formule :

$$p(z) = (1-z)^3 c_4 + 3(1-z)^2 z c_3 + 3(1-z) z^2 c_2 + z^3 c_1 \quad \text{avec} \quad 0 \leq z \leq 1.$$

**16.** Machine de section individuelle pour réaliser de la verrerie, comprenant : un chargeur de paraisons (22) ; un appareil de déchargement de paraisons (32 ; 34) ; et une pelle (50) selon l'une quelconque des revendications 1 à 15, pour acheminer des paraisons (20) de verre fondu depuis une extrémité d'admission (52) de ladite pelle dans laquelle les paraisons tombent verticalement depuis ledit chargeur de paraisons (22) sous l'effet de la gravité vers une extrémité de sortie (54) de ladite pelle à partir de laquelle les paraisons sont dirigés selon une trajectoire angulaire pour déchargement audit appareil de déchargement de paraisons qui décharge les paraisons à un moule de paraisons de la machine.

**17.** Procédé pour acheminer des paraisons (20) de verre fondu tombant verticalement sous l'effet de la gravité dans une pelle (50) vers un appareil aval de déchargement de paraisons (32, 34) qui reçoit des paraisons de la pelle selon une trajectoire angulaire pour déchargement par l'appareil aval de déchargement de paraisons vers un moule de paraisons, ledit procédé comprenant : l'alimentation des paraisons (20) de sorte qu'ils tombent verticalement sous l'effet de la gravité dans une extrémité d'admission (52) de la pelle (50) ; guidage des paraisons à travers une portion courbe (56) de la pelle située entre l'extrémité d'admission (52) de la pelle et une extrémité de sortie (54) de la pelle, la pelle ayant une configuration transversale qui est concave et a une première largeur à l'extrémité d'admission (52) de la pelle et une deuxième largeur à l'extrémité de sortie (54) de la pelle ; direction des paraisons de l'extrémité de sortie (54) de la pelle selon une trajectoire angulaire vers l'appareil aval de déchargement de paraisons ; **caractérisé en ce que** la pelle (50) est configurée pour recevoir et acheminer des paraisons (20) chacun dimensionné pour être utilisé en formant un récipient choisi ; la pelle a une configuration transversale en forme de U avec un fond semi-circulaire et des côtés opposés (58, 60) au-dessus du fond semi-circulaire qui sont approximativement parallèles ; la deuxième largeur à ladite extrémité de sortie (54) de la pelle est la largeur entre lesdits côtés opposés (58, 60) et est plus petite que la portion à diamètre le plus grand (40 ou 42) des paraisons entrant dans l'extrémité d'admission (52) de la pelle ; et la pelle perd progressivement en largeur dans un sens de l'extrémité d'admission (52) vers l'extrémité de sortie (54).

FIG. 1
PRIOR ART

FIG. 2

PRIOR ART

FIG. 11

EP 2 360 124 B1

FIG. 3

FIG. 4

FIG. 5

16

FIG. 6

FIG. 7

FIG. 8

EP 2 360 124 B1

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5549727 A, Meyer
- US 2002046575 A1
- US 5824129 A
- US 2637429 A
- US 1473587 A
- US 6038888 A
- JP 63236718 A